Europäisches Patentamt

**European Patent Office**

Office européen des brevets

(19)

(11) **EP 0 681 184 B1**

(12) **EUROPÄISCHE PATENTSCHRIFT**

(45) Veröffentlichungstag und Bekanntmachung des Hinweises auf die Patenterteilung:
**26.09.2001 Patentblatt 2001/39**

(51) Int Cl.$^7$: **G01N 35/10**, G01B 7/28, G01B 7/02, G01D 5/24

(21) Anmeldenummer: **95105887.4**

(22) Anmeldetag: **20.04.1995**

(54) **Analysengerät mit automatischer Justierung der Transporteinrichtung der Pipettiernadel**

Analyser with automatic determination of the reference position of a pipetting needle

Appareil d'analyse avec détermination automatique de la position de référence d'une aiguille de prélèvement

(84) Benannte Vertragsstaaten:
**AT BE CH DE DK ES FR GB GR IE IT LI LU NL PT**

(30) Priorität: **02.05.1994 CH 139394**

(43) Veröffentlichungstag der Anmeldung:
**08.11.1995 Patentblatt 1995/45**

(73) Patentinhaber: **F. Hoffmann-La Roche AG
4002 Basel (CH)**

(72) Erfinder:
• **Bonacina, Guido
CH-6020 Emmenbrücke (CH)**

• **Caratsch, Thomas
CH-8404 Reutlingen (CH)**
• **Moser, Rolf
CH-6354 Vitznau (CH)**

(74) Vertreter:
**AMMANN PATENTANWAELTE AG BERN
Schwarztorstrasse 31
3001 Bern (CH)**

(56) Entgegenhaltungen:
**EP-A- 0 555 739        WO-A-91/16675
US-A- 4 305 007        US-A- 5 270 210**

**Beschreibung**

Die Erfindung betrifft ein Analysengerät, das folgende Komponenten enthält:

- eine waagerecht angeordnete Grundplatte auf der Primärgefässe und Sekundärgefässe angeordnet sind,
- eine durch eine Leitung mit einer Dosiervorrichtung verbundenen, aus einem elektrisch leitenden Material bestehenden Pipettiernadel zur Uebertragung von jeweils einem vorbestimmten Flüssigkeitsvolumen von einem Primärgefäss zu einem Sekundärgefäss,
- eine Transportvorrichtung zum gesteuerten Transport der Pipettiernadel in drei zueinander senkrechten Richtungen (X- ,Y- ,Z-Richtung) , wobei zwei der Transportrichtungen (X- bzw. Y-Richtung) waagerecht verlaufen und die dritte Transportrichtung (Z-Richtung) vertikal verläuft,
- einen mit der Grundplatte mechanisch und elektrisch verbundenen, elektrisch leitenden Bezugskörper, der in jeder der waagerechten Transportrichtungen (X- bzw. Y-Richtung) zwei Aussenflächen hat, die senkrecht zur Transportrichtung angeordnet sind,
- eine Steuereinrichtung zur Steuerung der Dosiervorrichtung und der Transportvorrichtung, und
- eine Schaltung zur Messung der elektrischen Kapazität zwischen der Pipettiernadel und dem Bezugskörper.

Die Erfindung betrifft insbesondere die Ausgestaltung der Transportvorrichtung der Pipettiernadel der Pipettiervorrichtung eines automatischen Analysengerätes ist, z.B. ein Analysengerät zur Durchführung von Analysen biologischer Proben.

Die Erfindung betrifft ferner ein Verfahren zum automatischen Transport einer Pipettiernadel einer automatischen Pipettiervorrichtung eines Analysengerätes zu einer Anzahl Pipettierpositionen mittels einer Transportvorrichtung, wobei jede Pipettierposition der Position eines bestimmten Gefässes entspricht, das auf einer Gefässträgereinheit angeordnet ist, wobei die Transportvorrichtung dazu eingerichtet ist, die Pipettiernadel in drei zueinander senkrechten Richtungen (X, Y, Z) zu bewegen, und wobei jede dieser Richtungen parallel zu einer der Koordinatenachsen des Koordinatensystems der Transportvorrichtung ist, wobei zur Messung der Koordinaten von Bezugspunkten ein elektrisch leitenden Bezugskörper verwendet wird, der mit der Grundplatte mechanisch und elektrisch verbunden ist, und der in jeder der waagerechten Transportrichtungen (X- bzw. Y-Richtung) zwei Aussenflächen hat, die senkrecht zur Transportrichtung angeordnet sind, bei welchem Verfahren die elektrische Kapazität zwischen der Pipettiernadel (42) und dem Bezugskörper (45) gemessen wird.

Ein typischer Pipettiervorgang in einem automatischen Analysengerät ist z.B. die Entnahme eines bestimmten Reagenzvolumens aus einem Primärgefäss, z.B. einem Reagenzbehälter, und dessen Abgabe an einem Sekundärgefäss, z.B. einem Reaktionsgefäss. Dabei führt eine Transportvorrichtung die Pipettiernadel von einer Zielposition zur nächsten. In jeder Zielposition bewirkt die automatisch gesteuerte Dosiervorrichtung die gewünschte Entnahme oder Abgabe eines Flüssigkeitsvolumens.

Im dreidimensionalen, rechtwinkligen Koordinatensystem der Transportvorrichtung sind die Primär- bzw. Sekundärgefässe in Gefässbehälter auf Trägerplatten angeordnet, die parallel zur XY- Ebene des Koordinatensystems sind. Wenn die Transportvorrichtung die Pipettiernadel zu einer Zielposition führt, bewegt diese Vorrichtung die Pipettiernadel zunächst in einer zur XY-Ebene parallelen Ebene bis sie oberhalb des Zielgefässes liegt und bewirkt anschliessend eine Abwärtsbewegung der Pipettiernadel bis diese in der richtigen Lage für eine Flüssigkeitsentnahme aus einem Primärgefäss bzw. eine Flüssigkeitsabgabe in ein Sekundärgefäss befindet.

Damit die Transportvorrichtung die Pipettiernadel zu einer genau richtigen Zielposition in der XY-Ebene, d.h. genau oberhalb eines Primär- bzw. Sekundärgefässes, führen kann, müssen folgende Bedingungen erfüllt sein:

- die Steuereinrichtung der Transportvorrichtung muss die X- und Y-Koordinaten der Zielposition als Eingangssignal erhalten, um die Transportvorrichtung entsprechend steuern zu können,

- das Primär- bzw. Sekundärgefäss muss sich an der genau richtigen Stelle befinden,

- die Transportvorrichtung muss in jeder Transportrichtung justiert sein, d.h. in jeder Transportrichtung muss eine Position definiert werden, die als Bezugsposition gilt.

Die Internationale Patentanmeldung mit Publikationsnummer WO 91/16675 beschreibt eine automatische Pipettiervorrichtung der eingangs erwähnten Art, bei der zur Ermittlung von Bezugswerten der Koordinaten in jeder der Bewegungsrichtungen (X-, Y-, Z-Richtung) der Pipettiernadel eine Abtastung von einer Fläche eines elektrisch leitenden Bezugskörpers mit der elektrisch leitenden Pipettiernadel durchgeführt wird, wobei der elektrische Kontakt bei der Berührung der Fläche des Bezugskörpers mit der Pipettiernadel mittels einer elektrischen Schaltung erfasst wird, mit der die elektrische Kapazität zwischen der Pipettiernadel und dem Bezugskörper gemessen wird.

Die bekannte Vorrichtung hat den Nachteil, dass die wiederholte Berührung der Flächen des Bezugskörpers mit der manchmal unsauberen Aussenwand der Pipettiernadel die Entstehung von Ablagerungen auf den abgetasteten Stellen der Flächen des Bezugskörpers fördert. Je nach der Art der pipettierten Flüssigkeiten können diese Ablagerungen elektrisch leitend oder nicht leitend sein.

Wenn derartige Ablagerungen elektrisch leitend sind, verursachen sie eine ungenaue Erfassung der Position der abgetasteten Flächen. Dadurch wird die Genauigkeit der Ermittlung von Bezugswerten von Koordinaten für die genaue Steuerung des Transports der Pipettiernadel in Frage gestellt.

Wenn derartige Ablagerungen elektrisch nicht leitend sind, verhindern sie den beabsichtigten elektrischen Kontakt zwischen Pipettiernadel und Bezugskörper. In diesem Fall wird die Pipettiernadel auch nach Erreichen der abgetasteten Fläche wegen ausbleibender Kontakterfassung von der Transportvorrichtung gegen den Bezugskörper gedrückt. Die entsprechende mechanische Belastung kann die Pipettiernadel verbiegen und sie auf diese Weise unbrauchbar machen.

Der Erfindung liegt daher die Aufgabe zugrunde, ein Analysengerät zur Verfügung zu stellen, das die oben erwähnten Nachteile nicht hat. Der Erfindung liegt ferner die Aufgabe zugrunde, ein Verfahren zum automatischen Transport der Pipettiernadel einer automatischen Pipettiervorrichtung der eingangs angegebenen Art zur Verfügung zustellen, mit der das soeben definierte Ziel erreichbar ist.

Der erste Teil der obigen Aufgabe wird erfindungsgemäss mit einem Analysengerät der eingangs erwähnten Art gelöst, das dadurch gekennzeichnet ist, dass es ferner

Mittel zur Bestimmung der Koordinaten einer Bezugsposition der Pipettiernadel in wenigstens einer der waagerechten Transportrichtungen (X- bzw. Y-Richtung) enthält, wobei diese Mittel dazu geeignet sind, durch die Steuereinrichtung die Transportvorrichtung der Pipettiernadel so zu bewegen, dass die Pipettiernadel

(i) in einer ersten Richtung entlang der wenigstens einen waagrechten Transportrichtung zu einer ersten Position in der Nähe von einer der zwei Aussenflächen des Bezugskörpers bewegt wird, ohne jedoch diese zu berühren, wobei diese ersten Position erreicht wird, wenn der mit der Schaltung gemessene Wert der elektrischen Kapazität zwischen der Pipettiernadel und dem Bezugskörper einen vorbestimmten Wert erreicht, der einem bestimmten Abstand zwischen der Pipettiernadel und der Aussenfläche des Bezugskörpers entspricht, und
(ii) in einer zweiten, der ersten entgegengesetzten Richtung entlang der wenigstens einen waagrechten Transportrichtung zu einer zweiten Position in der Nähe von der anderen der zwei Aussenflächen des Bezugskörpers bewegt wird, ohne jedoch diese zu berühren, wobei diese zweite Position erreicht wird, wenn der mit der Schaltung gemessene Wert der elektrischen Kapazität zwischen der Pipettiernadel und dem Bezugskörper einen vorbestimmten Wert erreicht, der einem bestimmten Abstand zwischen der Pipettiernadel und der Aussenfläche des Bezugskörpers entspricht.

Der zweite Teil der obigen Aufgabe wird erfindungsgemäss mit einem Verfahren der eingangs erwähnten Art gelöst, das dadurch gekennzeichnet ist, dass

zur Bestimmung der Koordinaten einer Bezugsposition der Pipettiernadel in wenigstens einer der waagerechten Transportrichtungen (X- bzw. Y-Richtung), die Pipettiernadel

(i) in einer ersten Richtung entlang der wenigstens einen waagrechten Transportrichtung zu einer ersten Position in der Nähe von einer der zwei Aussenflächen des Bezugskörpers bewegt wird, ohne jedoch diese zu berühren, wobei diese ersten Position erreicht wird, wenn der mit der Schaltung gemessene Wert der elektrischen Kapazität zwischen der Pipettiernadel und dem Bezugskörper einen vorbestimmten Wert erreicht, der einem bestimmten Abstand zwischen der Pipettiernadel und der Aussenfläche des Bezugskörpers entspricht, und
(ii) in einer zweiten, der ersten entgegengesetzten Richtung entlang der wenigstens einen waagrechten Transportrichtung zu einer zweiten Position in der Nähe von der anderen der zwei Aussenflächen des Bezugskörpers bewegt wird, ohne jedoch diese zu berühren, wobei diese zweite Position erreicht wird, wenn der mit der Schaltung gemessene Wert der elektrischen Kapazität zwischen der Pipettiernadel und dem Bezugskörper einen vorbestimmten Wert erreicht, der einem bestimmten Abstand zwischen der Pipettiernadel und der Aussenfläche des Bezugskörpers entspricht.

Der Hauptvorteil des erfindungsgemässen Analysengerätes bzw. des erfindungsgemässen Verfahrens liegt darin, dass für die beabsichtigte Funktion der erfindungsgemässen Vorrichtung eine Berührung der abgetasteten Flächen mit der Pipettiernadel nicht erforderlich ist, d.h. die Abtastung der Flächen ist berührungslos. Mit der erfindungsgemässen Lösung können sich daher praktisch keine Ablagerungen auf den abgetasteten Flächen des Bezugskörpers bilden. Derartige Ablagerungen können daher in keiner Weise die Genauigkeit und Zuverlässigkeit des erfindungsgemässen Verfahrens beeinträchtigen oder Deformationen der Pipettiernadel verursachen.

Ein weiterer Vorteil des erfindungsgemässen Analysengerätes bzw. des erfindungsgemässen Verfahrens liegt darin, dass eine korrekte und zuverlässige Funktion der erfindungsgemässen Vorrichtung auch dann gewährleistet ist, wenn das Pipettiersystem mit einer elektrisch leitenden Flüssigkeit gefüllt ist.

Eine bevorzugte Ausführungsform des erfindungsgemässen Analysengerätes ist dadurch gekennzeichnet, dass der elektrische Widerstand der Flüssigkeit, die in der Leitung enthalten ist, die die Pipettiernadel mit dem Dosiersystem verbindet, grösser als einen vorbestimmten Grenzwert ist. Dies wird durch geeignete Wahl der Abmessungen (Durchmesser, Länge) der Leitungerreicht, die die Pipettiernadel mit dem Dosiersystem verbindet. Diese Ausführungsform hat den Vorteil, dass mögliche Störungen, die auf die elektrische Leitfähigkeit der Flüssigkeit im Pipettiersystem in Kombination mit gerätespezifischen Abweichungen in der elektrischen Umgebung der Pipettiernadel zurückzuführen sind, keinen Einfluss auf die Funktion des erfindungsgemässen Analysengerätes haben können.

Ein Ausführungsbeispiel der Erfindung wird im folgenden anhand der beiliegenden Zeichnungen beschrieben. Es zeigen:

Fig. 1 eine perspektivische Ansicht eines Analysengerätes.

Fig. 2 eine Draufsicht des in Fig. 1 dargestellten Analysengerätes.

Fig. 3 eine perspektivische schematische Darstellung der Anordnung der Probegefässe, Reagenzgefässe und Reaktionsgefässe im Analysengerät 11.

Fig. 4 eine vergrösserte perspektivische Darstellung eines der Reaktionsgefässe 31 in Figuren 1-3.

Fig. 5 eine Darstellung des Reaktionsgefässes 31 in Fig. 4, die den Innenraum des Reaktionsgefässes 31 zeigt.

Fig. 6 eine schematische Darstellung einer Abtastung eines Bezugskörpers 45 mit einer Pipettiernadel 42.

Fig. 7 eine schematische Darstellung der Bewegung der Pipettiernadel 42 in einer waagerechten Richtung (X- bzw. Y- Richtung) beim Abtastvorgang gemäss Fig. 6.

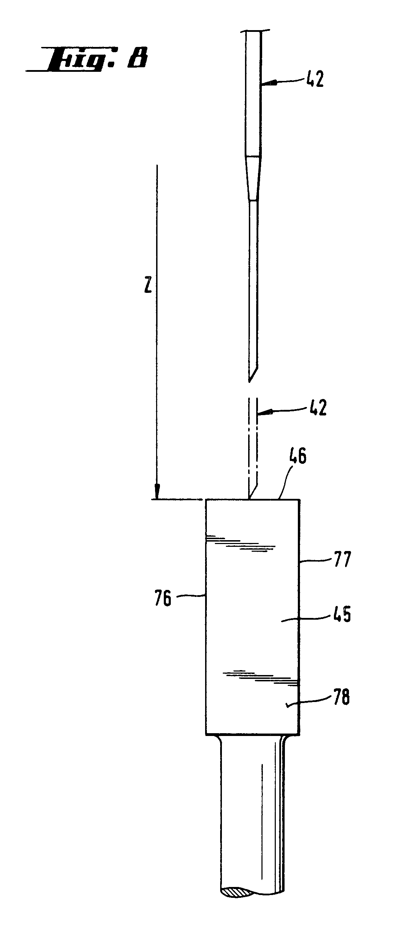

Fig. 8 eine schematische Darstellung einer Abtastung in vertikaler Richtung (Z-Richtung) der oberen Fläche eines Bezugskörpers 45 mit einer Pipettiernadel 42.

Fig. 9 eine schematische Darstellung einer Anordnung zur Messung der Kapazität zwischen der Pipettiernadel 42 und dem Bezugskörper 45.

Fig. 10 ein Ersatzschaltbild der Anordnung gemäss Fig. 9.

Fig. 11 ein Diagramm der Variation der elektrischen Kapazität zwischen der Pipettiernadel 42 und dem Bezugskörper 45.

## Analysengerät

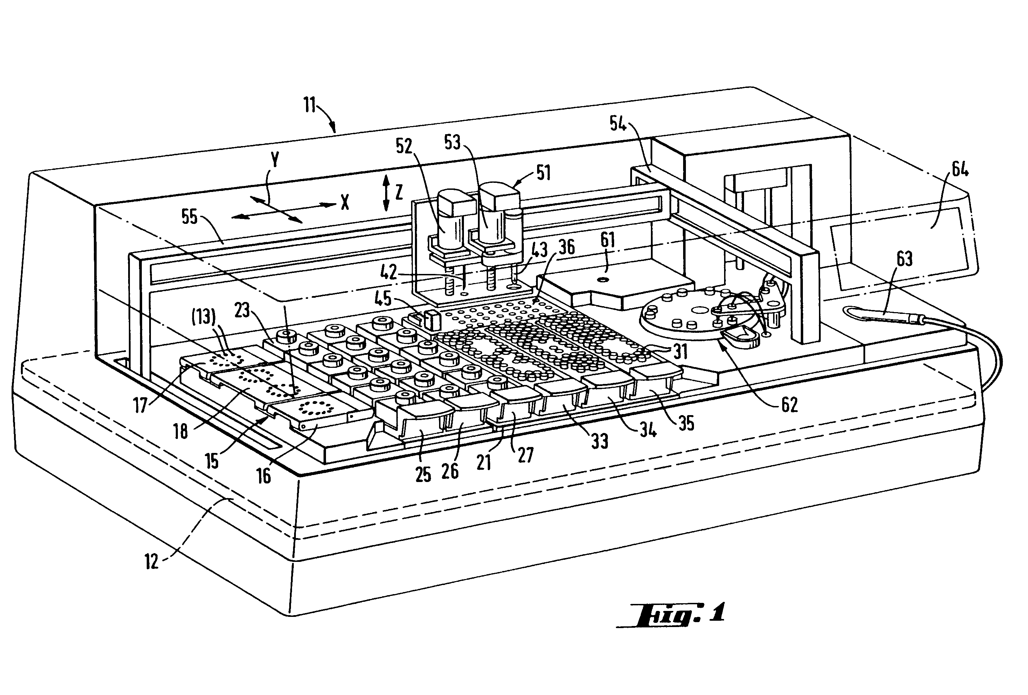

Fig. 1 zeigt eine perspektivische Ansicht eines Analysengerätes 11. Dieses Gerät enthält eine waagerecht angeordnete Grundplatte 12 auf der Primärgefässe, z.B. Probengefässe 13 bzw. Reagenzbehälter 23, und Sekundärgefässe, z.B. Reaktionsgefässe 31 angeordnet sind. Das Analysengerät 11 enthält eine automatische Pipettiereinrichtung, in der eine aus einem elektrisch leitenden Material bestehenden Pipettiernadel 42 durch eine Leitung 99 mit einer Dosiervorrichtung 96 verbunden ist. Diese Dosiervorrichtung ist z.B. eine automatisch gesteuerte Dosierspritze, die im nachstehend erwähnten Transportkopf 51 enthalten ist.

Mit der Pipettiernadel 42 wird jeweils ein vorbestimmtes Flüssigkeitsvolumen von einem Primärgefäss 13 bzw. 23 zu einem Sekundärgefäss 31 übertragen. Die Pipettiereinrichtung enthält eine Transportvorrichtung 51-55 zum gesteuerten Transport der Pipettiernadel 42 in drei zueinander senkrechten Richtungen, X- ,Y- , Z-Richtung, wobei zwei der Transportrichtungen X- bzw. Y-Richtung waagerecht verlaufen und die dritte Transportrichtung Z-Richtung vertikal verläuft. Die Transportvorrichtung enthält einen Transportkopf 51. Der Transportkopf enthält einen Antrieb 52 zum Transport der Pipettiernadel 42 in vertikaler Richtung. Vorzugsweise enthält der Transportkopf 51 ausserdem einen Antrieb 53 zum Transport eines Greifers 43 in vertikaler Richtung. Mit diesem Greifer können Reaktionsgefässe zu verschiedenen Bearbeitungspositionen transportiert werden, z.B. von einer Ladeposition, bei der die Reaktionsgefässe mit Proben und Reagenzien beschickt werden, zu einem im Analysengerät enthaltenen Inkubator 36, und von dort zu einer ebenfalls im Analysengerät enthaltenen Wascheinrichtung 62 oder zu einem Photometer 61.

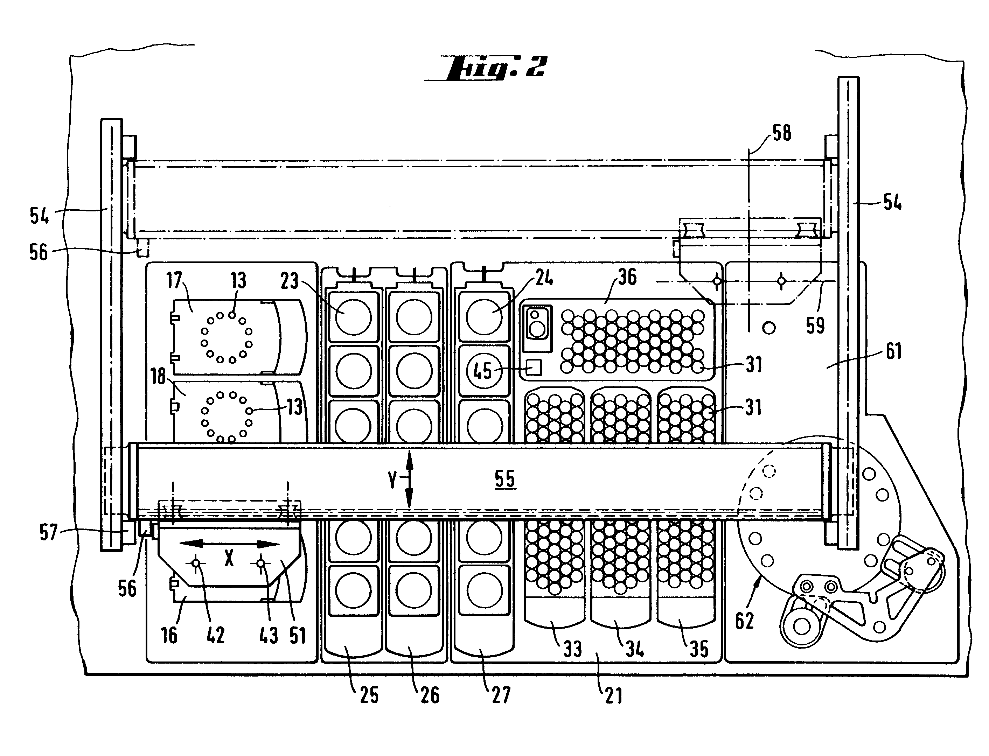

Der Transportkopf 51 ist durch einen geeigneten Antrieb in X- Richtung entlang einer Schiene 55 bewegbar. Diese Schiene 55 ist durch einen geeigneten Antrieb in Y-Richtung entlang Schienen 54 bewegbar (siehe Fig. 2). Die Schienen 54 sind auf der Grundplatte 12 befestigt.

Das Analysengerät enthält einen elektrisch leitenden Bezugskörper 45, der mit der Grundplatte 12 mechanisch und elektrisch verbunden ist, und der in jeder der waagerechten Transportrichtungen X- bzw. Y-Richtung je zwei Aussenflächen 76, 77 bzw. 78, 79 hat, die senkrecht zur Transportrichtung angeordnet sind. Der Bezugskörper 45 wird für die nachstehend beschriebene feine Justierung der Transportvorrichtung 51-55 der Pipettiernadel verwendet. Der Bezugskörper 45 ist vorzugsweise ein Vierkantbolzen mit einem quadratischen Querschnitt.

Auf der Grundplatte 12 ist eine Trägerplatte 21 angeordnet. Auf diese Trägerplatte werden verschiedene Gefässe angeordnet. Wie in Fig. 1-3 dargestellt, sind z.B. auf Trägerplatte 21 folgende Gefässe angeordnet:

- Probengefässe 13 in Probengefässhalter 16, 17, 18, die ihrerseits in einer Probengefässhaltereinheit 15 angeordnet sind,
- Reagenzgefässe 23, 24 in Reagenzgefässhalter 25, 26, 27, und
- Reaktionsgefässe 31 in Reaktionsgefässhalter 33, 34, 35.

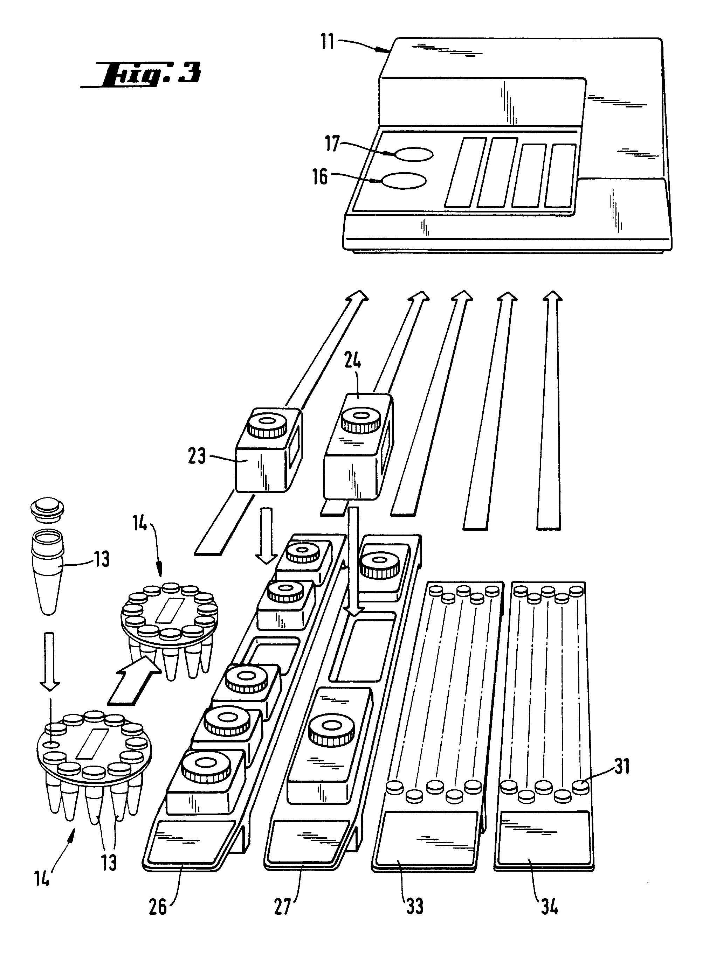

Wie in Fig. 3 gezeigt, können die Probenbehälter 13 z.B. in einer kreisförmigen Anordnung 14 angeordnet sein, die in einem der Probengefässhalter aufgenommen wird. Jedes der Probengefässe 13 hat einen Deckel, der mit der Pipettiernadel durchstechbar ist. Jeder der Probengefässhalter 16, 17, 18 hat einen Deckel, der Oeffnungen aufweist, durch die die Pipettiernadel Zugang zu den Deckeln der Probengefässe hat. Die Pipettiervorgänge werden mit verschlossenen Probengefässen durchgeführt.

Wie aus Fig. 3 ersichtlich ist jeder der Reagenzbehälter 23, 24 mit einem entsprechenden Deckel geschlossen. Auch dieser Deckel ist mit der Pipettiernadel durchstechbar. Die Pipettiervorgänge werden mit verschlossenen Reagenzgefässen durchgeführt.

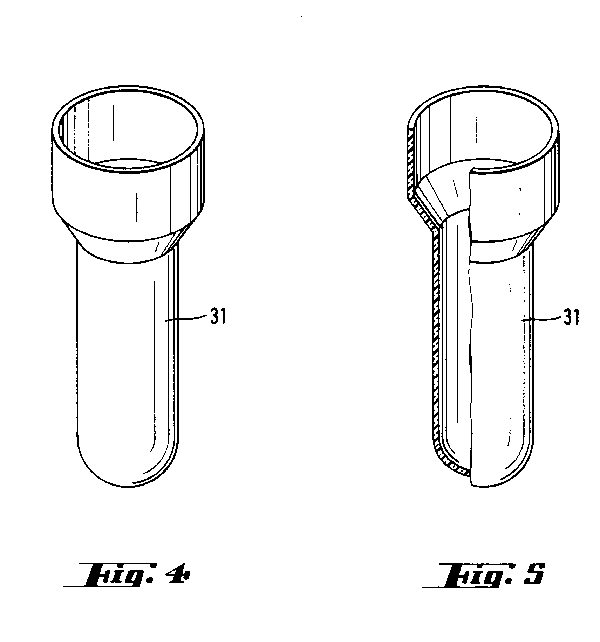

Fig. 4 zeigt eine vergrösserte perspektivische Darstellung eines der Reaktionsgefässe 31 in Figuren 1-3. Fig. 5 zeigt eine Darstellung des Reaktionsgefässes 31 in Fig. 4, die den Innenraum des Reaktionsgefässes zeigt.

### Steuereinheit des Analysengeräts

Sämtliche durchzuführende Operationen, u.a. die Steuerung der Dosiervorrichtung 96 und der Transportvorrichtung 51-55 sind durch eine zentrale Steuereinheit (nicht dargestellt) des Analysengeräts gesteuert und koordiniert. Eine Bedienoberfläche 64 bzw. Tastatur zur Eingabe von Prozessparametern, sowie eine Anzeige zur Anzeige von Prozesszuständen ist schematisch dargestellt. Die Probendaten, welche beispielsweise mittels Barcode auf den Proberöhrchen aufgebracht sind, können über einen manuell geführten Lesestift oder Scanner 63 in einen Speicher eingelesen werden. Schnittstellen für einen Printer usw. (nicht dargestellt) sind vorgesehen.

### Mittel zur Justierung der Transportvorrichtung 51-55

Die nachstehend beschriebenen Ausführungsformen des Analysengerätes 11 enthalten Mittel zur groben Justierung der Transportvorrichtung 51-55 der Pipettiernadel 42. Hierfür werden z.B. Mittel verwendet, mit denen die Pipettiernadel 42 zu einer Endposition geführt wird und die Koordinaten (Xe, Ye, Ze) der Endposition der Pipettiernadel in jeder der drei zueinander senkrechten Richtungen erfasst und gespeichert werden. Die Endposition der Pipettiernadel 42 in X- bzw. Y-Richtung ist durch die entsprechende Endposition des Transportkopfes 51 definiert. In Fig. 2 wird der Transportkopf 51 in seiner Endposition in X- und Y-Richtung gezeigt. Die Endposition des Transportkopfes 51 in X-Richtung wird durch geeignete Mittel erfasst, wenn der Transportkopf 51 den Anschlag 56 erreicht. Die Endposition des Transportkopfes 51 in Y-Richtung wird durch geeignete Mittel erfasst, wenn der Transportkopf 51 den Anschlag 57 erreicht. Die höchstmögliche Lage der Pipettiernadel, die deren Antrieb 52 ermöglicht, definiert die Endposition der Pipettiernadel in Z-Richtung. Die Erreichung der Endposition des Transportkopfs 51 in jeder Transportrichtung wird durch geeignete Mittel erfasst, z. B. durch ein elektrisches Signal, das durch den Kontakt zwischen dem Transportkopf 51 und einem Anschlag ausgelöst und das an die Steuereinheit des Analysengerätes übermittelt wird.

In Fig. 2 wird durch gestrichelte Linien die Grundstellung 58 des Transportkopfes 51 in X-Richtung und die Grundstellung 59 der Schiene 55 in Y-Richtung dargestellt.

Das Analysengerät 11 enthält ferner folgende Mittel zur feinen, d.h. sehr genauen Justierung der Transportvorrichtung 51-55:

- eine Schaltung zur Messung der elektrischen Kapazität zwischen der Pipettiernadel 42 und dem Bezugskörper 45, und
- Mittel zur Bestimmung der Koordinaten einer Bezugsposition der Pipettiernadel 42 in wenigstens einer der waagerechten Transportrichtungen X- bzw. Y-Richtung, wobei diese Mittel dazu geeignet sind, die Transportvorrichtung 51-55 der Pipettiernadel 42 so zu bewegen, dass die Pipettiernadel 42 in entgegengesetzten Richtungen zu je einer Position in der Nähe jeder der beiden Aussenflächen 76, 77 bzw. 78, 79 des Bezugskörpers 45 bewegt wird, die senkrecht zur Transportrichtung angeordnet sind, wobei die Pipettiernadel 42 jeweils zu einer Fläche des Bezugskörpers 45 hin bewegt wird, bis der mit der Schaltung gemessene Wert der elektrischen Kapazität zwischen der Pipettiernadel 42 und dem Bezugskörper 45 einen vorbestimmten Wert erreicht, der einem bestimmten Abstand zwischen der Pipettiernadel 42 und der Fläche des Bezugskörpers 45 entspricht.

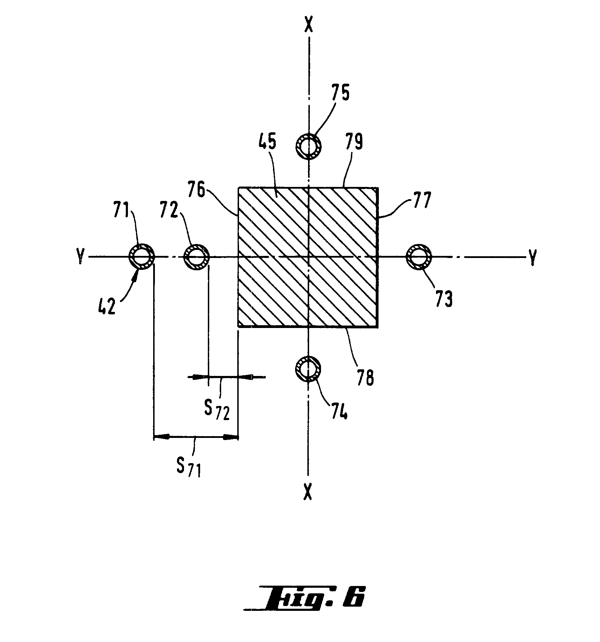

Wie in Fig. 6 dargestellt, hat der abgetastete Bereich des Bezugskörpers 45 in einer zur Längsachse des Bezugskörpers 45 senkrechten Ebene vorzugsweise einen quadratischen Querschnitt.

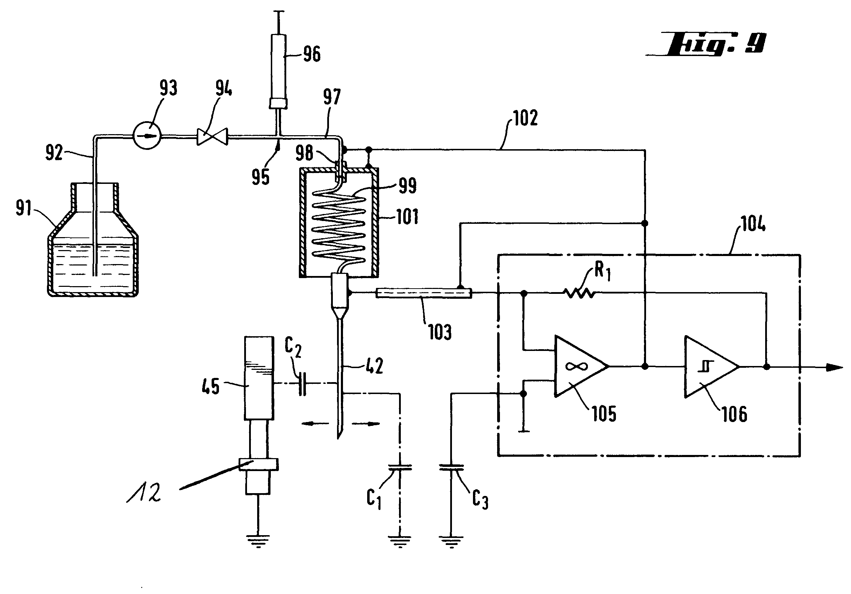

Der elektrische Widerstand der Flüssigkeit, die in der Leitung 99 enthalten ist, die die Pipettiernadel 42 mit dem Dosiersystem 96 verbindet (siehe Fig. 9), ist vorzugsweise grösser als ein vorbestimmter Grenzwert.

## 1. Bevorzugte Ausführungsform der Mittel zur feinen Justierung der Transportvorrichtung 51-55

Eine erste bevorzugte Ausführungsform des Analysengeräts enthält ferner folgende Mittel:

- Mittel zur Erfassung und Speicherung der Koordinatenwerte der zwei so definierten Positionen der Pipettiernadel 42 in der wenigstens einer waagerechten Transportrichtung X- bzw. Y-Richtung, und
- Mittel zur Ermittlung der Koordinaten einer Bezugsposition in der Transportrichtung durch Berechnung des Mittelwertes der zwei erfassten Koordinatenwerte.

Nach der Bestimmung der Koordinaten der Bezugsposition werden die X- bzw. Y-Koordinaten aller Pipettierpositionen der Pipettiernadel in Bezug auf die Koordinaten der Bezugsposition anhand der relevanten Dimensionen der verschiedenen Teile des Analysengerätes in der oben erwähnten Steuereinheit errechnet.

## 2. Bevorzugte Ausführungsform der Mittel zur feinen Justierung der Transportvorrichtung 51-55

Eine zweite bevorzugte Ausführungsform des Analysengeräts enthält Mittel zur Bestimmung der Koordinaten Xo, Yo einer Bezugsachse, die parallel zur vertikalen Transportrichtung Z und durch den Bezugskörper 45 verläuft, wobei diese Mittel dazu geeignet sind, die Transportvorrichtung 51-55 der Pipettiernadel 42 so zu bewegen, dass die Pipettiernadel 42 in beiden waagerechten Transportrichtungen (X- bzw. Y-Richtung) und in entgegengesetzten Richtungen zu je einer Position in der Nähe jeder der beiden Aussenflächen 76, 77 bzw. 78, 79 des Bezugskörpers 45 bewegt wird, die senkrecht zur Transportrichtung angeordnet sind, wobei die Pipettiernadel 42 jeweils zu einer Fläche des Bezugskörpers 45 hin bewegt wird, bis der mit der Schaltung gemessene Wert der elektrischen Kapazität zwischen der Pipettiernadel 42 und dem Bezugskörper 45 einen vorbestimmten Wert erreicht, der einem bestimmten Abstand zwischen Pipettiernadel 42 und der Fläche des Bezugskörpers 45 entspricht.

Nach der Bestimmung der Koordinaten Xo, Yo der oben erwähnten Bezugsachse werden die X- bzw. Y-Koordinaten aller Pipettierpositionen der Pipettiernadel in Bezug auf Xo, Yo anhand der relevanten Dimensionen der verschiedenen Teile des Analysengerätes in der oben erwähnten Steuereinheit errechnet.

Diese zweite bevorzugte Ausführungsform enthält vorzugsweise zusätzlich folgende Mittel:

- Mittel zur Erfassung und Speicherung der Koordinatenwerte der zwei so definierten Positionen der Pipettiernadel 42 in jeder der waagerechten Transportrichtungen (X- bzw. Y-Richtung), und
- Mittel zur Ermittlung der Koordinatenwerte einer Bezugsposition in jeder der waagerechten Transportrichtungen (X- bzw. Y-Richtung) durch Berechnung des Mittelwertes der zwei erfassten Koordinatenwerte.

## Schaltung zur Messung der Kapazität zwischen Pipettiernadel und Bezugskörper (Fig. 9, 10, 11)

Zur Messung der elektrischen Kapazität zwischen Pipettiernadel 42 und Bezugskörper 45 wird eine Schaltung gemäss Fig. 9 verwendet, die im Analysengerät ausserdem als Teil einer Niveau-Fühleinrichtung ("level detector") verwendet wird. Mit einer solchen Niveau-Fühleinrichtung wird die Eintauchtiefe der Pipettiernadel bei den Pipettiervorgängen (z.B. bei der Entnahme eines Probevolumens aus einem Probengefäss) durch eine Messung der elektrischen Kapazität zwischen der Pipettiernadel und der Oberfläche der flüssigen Probe so gesteuert, dass nur ein sehr kurzes Segment der Spitze der Pipettiernadel in die flüssige Probe eindringt und somit die an der Aussenfläche der Pipettiernadel unerwünschterweise mitgenommene Probenmenge möglichst klein ist. Dabei hat die Pipettiernadel neben ihrer eigenen Funktion als Teil der Pipettiervorrichtung, die zusätzliche Funktion ein Teil der elektrischen Messschaltung zu sein, mit der die elektrische Kapazität zwischen der Pipettiernadel und der Oberfläche der flüssige Probe gemessen wird.

Wie aus Fig. 9 ersichtlich, ist die Pipettiernadel 42 durch einen Schlauch 99, ein Verbindungsstück 98 und ein T-Glied 95 mit einer Dosierspritze 96 und durch ein Ventil 94, eine Pumpe 93 und eine Leitung 92 in flüssiger Verbindung mit der Flüssigkeit in einem Flüssigkeitsbehälter 91. Alle diese Komponenten bilden ein Flüssigkeitssystem, das während des Betriebs der Pipettiervorrichtung mit der im Flüssigkeitsbehälter 91 enthaltene Flüssigkeit gefüllt ist. Im vorliegenden Ausführungsbeispiel weist diese Flüssigkeit eine gute elektrische Leitfähigkeit auf.

Der Schlauch 99 ist in einem Abschirmgehäuse 101 ("guarding case") angeordnet. Der Verbindungsstück 98 ist mechanisch und elektrisch mit dem Abschirmgehäuse 101 und mit der Flüssigkeit in der Leitung 97 verbunden.

Wie ebenfalls aus Fig. 9 ersichtlich ist die Pipettiernadel 42 durch den Innenleiter eines Koaxialkabels 103 mit dem Eingang einer Oszillatorschaltung 104 elektrisch verbunden. Die Oszillatorschaltung 104 enthält einen Impedanzwandler 105 und einen daran angeschlossenen Spannungskomparator 106. Ein Kopplungswiderstand $R_1$ verbindet den Ausgang des Spannungskomparators 106 mit dem Eingang des Impedanzwandlers 105. Die elektrische Verbindung des Ausgangs des Impedanzwandlers 105 mit dem Spannungskomparator 106 ist mit dem Aussenleiter des Koaxialkabels 103 und über eine Leitung 102 ("guard") mit dem Abschirmgehäuse 101 und mit der Flüssigkeit in der Leitung 97 elektrisch verbunden. Das Abschirmgehäuse 101 ("guarding case") und die Leitung 102 ("guard") dienen dazu, die Schaltung zur Messung der Kapazität $C_2$ zwischen der Pipettiernadel 42 und dem Bezugskörper 45 vom oben erwähnten Flüssigkeitsystem der Pipettiereinrichtung elektrisch zu entkoppeln. Auf diese Weise wird die Funktion der Schaltung zur Messung der Kapazität $C_2$ zwischen der Pipettiernadel 42 und dem Bezugskörper 45 gegen Streukapazitäten unempfindlich gemacht, die sonst durch die mechanische und flüssige Verbindung der Pipettiernadel 42 mit dem oben erwähnten Flüssigkeitsystem die Funktion der Messschaltung beeinflussen würden.

Wie in Fig. 9 schematisch dargestellt, ist der Bezugskörper 45 direkt mit einer Grundplatte 12 des Analysengeräts (siehe Fig. 1) mechanisch und elektrisch verbunden. Elektrisch ist die Grundplatte 12 mit der Erde verbunden.

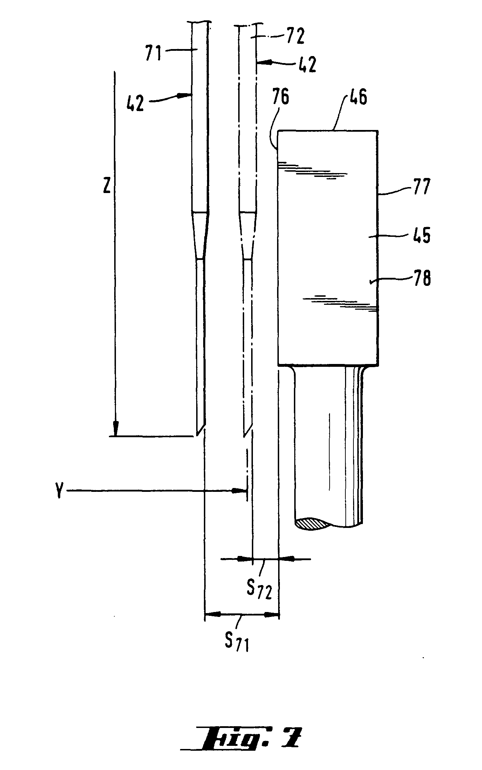

In Fig. 9 stellt $C_2$ die Kapazität zwischen der Pipettiernadel 42 und dem Bezugskörper 45 dar. $C_3$ stellt die Kapazität zwischen der Masse der Oszillatorschaltung 104 und Erde dar. $C_1$ stellt die Kapazität zwischen der Pipettiernadel 42 und Erde dar, wenn die Pipettiernadel sich in einer bestimmten vertikalen Lage befindet, z.B. in der in Fig. 7 dargestellten Lage, aber so weit vom Bezugskörper 45 entfernt, dass $C_2$ praktisch den Wert Null hat. Im vorliegenden Beispiel ist $C_1 =$ 4 Picofarad.

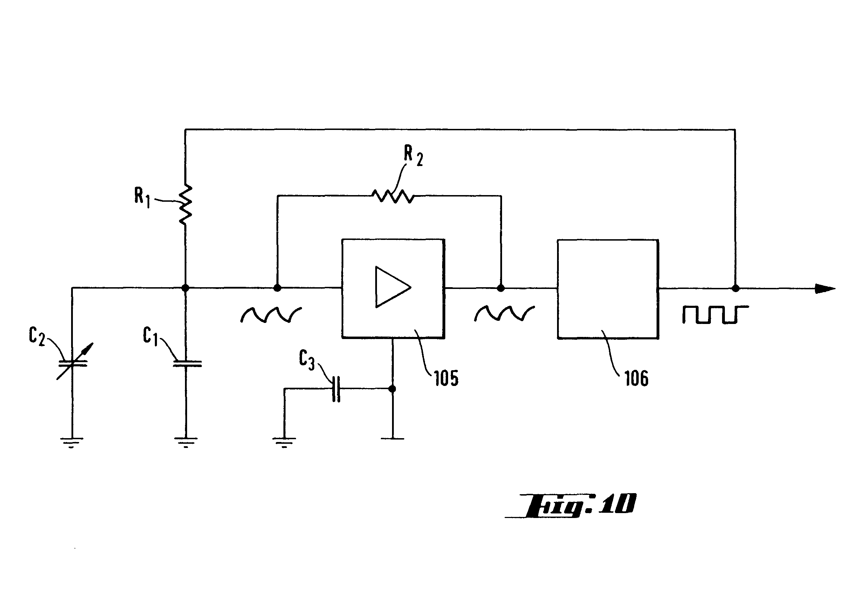

Fig. 10 zeigt ein Ersatzschalbild der Anordnung gemäss Fig. 9. In Fig. 10 stellt $R_2$ der elektrische Widerstand der Flüssigkeit im Schlauch 99 in Fig. 9 dar.

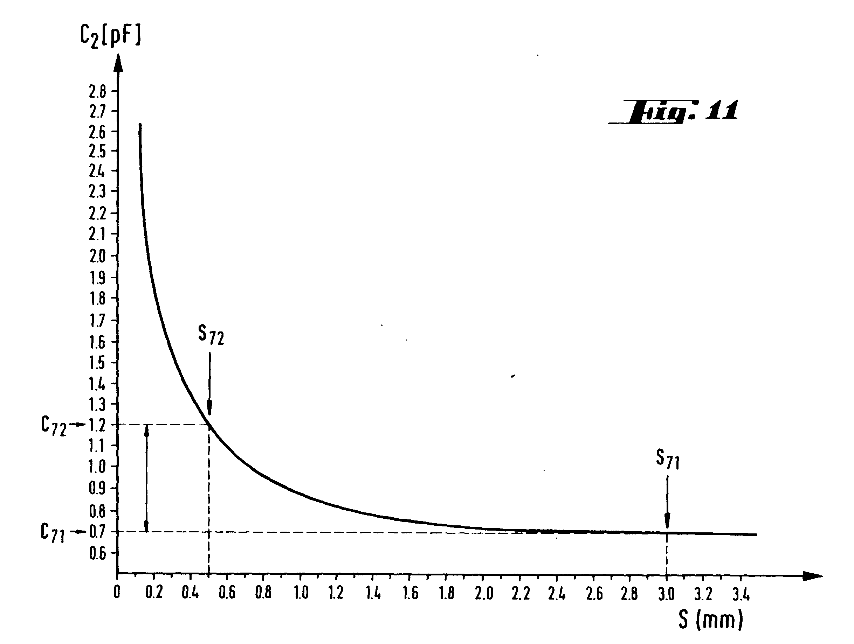

Fig. 11 zeigt die Variation der Kapazität $C_2$ in Picofarad in Funktion des Abstands zwischen der Pipettiernadel 42 und dem Bezugskörper 45.

Die Schwingungsfrequenz f des Oszillators 104 ist durch folgende Formel gegeben

$$f = 1/T = 1/2 * R_1(C_1 + C_2)$$

Die Schwingungsfrequenz f des Oszillators 104 ist z.B. f = 120 Kilohertz wenn $R_1$ = 1 Megaohm , $C_1$ = 4 Picofarad und $C_2$ = 0 Picofarad.

Selbstverständlich kann f andere Werte haben. Erheblich höhere Werte von f, z.B. im Megahertzbereich, sind nachteilig, weil der Einfluss von Störsignalen zu gross wird. Erheblich niedrigere Werte von f sind ebenfalls nachteilig, weil für die Auswertung des Ausgangssignals der Oszillatorschaltung mehr Zeit benötigt wird.

Fig. 10 zeigt u.a. die Wellenformen an 3 Punkten des dort dargestellten Ersatzschaltbildes der Oszillatorschaltung 104 gemäss Fig. 9. Die Wellenform am Eingang bzw. Ausgang des Impedanzwandlers 105 ist darauf zurückzuführen, dass der RC-Glied der Oszillatorschaltung mit einer Zeitkonstante t dauernd geladen und entladen wird, wobei $t = 2 * R_1(C_1 + C_2)$.

Wenn die Pipettiernadel 42 sich einer der seitlichen Aussenflächen des Bezugskörpers 45 nähert, nimmt der Wert von $C_2$ gemäss Fig. 11 zu, und dies führt zu einer entsprechenden Aenderung des Wertes von f. Durch Messung der Frequenz f des Signals am Ausgang des Spannungskomparators 106 ist es daher möglich den Wert von $C_2$ zu messen und damit der entsprechende Abstand zwischen der Pipettiernadel 42 und der seitlichen Aussenflächen des Bezugskörpers 45 zu bestimmen. Hierfür wird vorher der Wert von $C_2$ für eine bestimmte Position der Pipettiernadel 42 im Analysengerät 11 gemessen. Diese bestimmte Position der Pipettiernadel ist z.B. die in Figuren 6 und 7 gezeigte Position 71, bei der der Abstand $S_{71}$ zwischen der Pipettiernadel 42 und dem Bezugskörper 45 drei Millimeter beträgt. Der entsprechende Wert von $C_2$ wird in Fig. 11 mit $C_{71}$ bezeichnet.

Für eine geeignete Funktion des Impedanzwandlers 105 ist es wichtig, dass der Widerstand $R_2$ der Flüssigkeit im Schlauch 99 einen Grenzwert von 100 Kiloohm nicht unterschreitet. Andernfalls würde $R_2$ den Impedanzwandler 105 zu stark belasten. Ein zu niedriger Wert von $R_2$ kann daraus resultieren, dass die Flüssigkeit im Flüssigkeitssystem der Pipettiervorrichtung einen sehr niedrigen spezifischen elektrischen Widerstand hat. Durch geeignete Wahl der Parameter, die den Wert von $R_2$ bestimmen, kann jedoch ein Wert dieses Widerstandes erzielt werden, der die obige Bedingung erfüllt.

Der Wert von $R_2$ ist gegeben durch $R_2 = r * 1 * 4 / \pi \, d^2$, worin

    r = spezifischer elektrischer Widerstand der Flüssigkeit im Schlauch 99
    l = Länge des Schlauches 99
    d = Innendurchmesser des Schlauches 99

Mit r = 0.26 Ohm * Meter, 1 = 0.76 Meter und d = 0.76 Millimeter ist $R_2$ = 436 Kiloohm.

Funktionsweise des Analysengerätes

Mit einem Analysengerät wird die Pipettiernadel 42 der automatischen Pipettiervorrichtung des Analysengerätes 11 zu einer Anzahl Pipettierpositionen mittels einer Transportvorrichtung 51-55 geführt, wobei jede Pipettierposition der Position eines bestimmten Gefässes entspricht, wobei die Transportvorrichtung 51-55 dazu eingerichtet ist, die Pipettiernadel 42 in drei zueinander senkrechten Richtungen (X-, Y-, Z- Richtungen) zu bewegen, und wobei jede dieser Richtungen parallel zu einer der Koordinatenachsen des Koordinatensystems der Transportvorrichtung 51-55 ist.

Vor der nachstehend beschriebenen feinen Justierung der Transportvorrichtung 51-55 der Pipettiernadel wird eine grobe Justierung der Transportvorrichtung 51-55 der Pipettiernadel 42 durchgeführt. Dafür wird die Pipettiernadel 42 mit der Transportvorrichtung 51-55 zu den oben definierten Endposition in jeder der drei zueinander senkrechten Richtungen geführt und

die Koordinaten $(X_e, Y_e, Z_e)$ der Endposition werden erfasst und gespeichert .

Zur feinen, d.h. genauen Justierung der Transportvorrichtung 51-55 der Pipettiernadel werden Koordinaten von Bezugspunkten ermittelt. Dafür wird der elektrisch leitende Bezugskörper 45 verwendet, der mit der Grundplatte 12 mechanisch und elektrisch verbunden ist, und der in jeder der waagerechten Transportrichtungen (X- bzw. Y-Richtung) je zwei Aussenflächen 76, 77 bzw. 78, 79 hat, die senkrecht zur Transportrichtung angeordnet sind.

Zur feinen, d.h. genauen Justierung der Transportvorrichtung 51-55 der Pipettiernadel werden folgende Verfahrensschritte durchgeführt:

- die elektrische Kapazität $C_2$ zwischen der Pipettiernadel 42 und dem Bezugskörper 45 wird mit der oben beschriebene Schaltung gemessen, wobei als erstes der Wert von $C_2$ für eine bestimmte Position 71 der Pipettiernadel 42 im Analysengerät 11 gemessen wird. Diese bestimmte Position der Pipettiernadel ist z.B. die in Figuren 6 und 7 gezeigte Position 71, bei der der Abstand $S_{71}$ zwischen der Pipettiernadel 42 und dem Bezugskörper 45 drei Millimeter beträgt. Der entsprechende Wert von $C_2$ wird in Fig. 11 mit $C_{71}$ bezeichnet. Wie aus Fig. 11 ersichtlich, ist z.B. $C_{71}$ = 0.7 Picofarad, und

- zur Bestimmung der Koordinaten einer Bezugsposition der Pipettiernadel 42 in wenigstens einer der waagerechten Transportrichtungen (X- bzw. Y-Richtung), wird die Pipettiernadel 42 mit der Transportvorrichtung 51-55 in entgegengesetzten Richtungen zu je einer Position in der Nähe jeder der beiden Aussenflächen 76, 77 bzw. 78, 79 des Bezugskörpers 45 bewegt, die senkrecht zur Transportrichtung angeordnet sind. Dabei wird die Pipettiernadel 42 z.B. in Y-Richtung zuerst zu einer Aussenfläche 76 des Bezugskörpers 45 hin bewegt, bis die Pipettiernadel eine Position 72 erreicht, bei der der gemessene Wert der elektrischen Kapazität $C_2$ zwischen der Pipettiernadel 42 und dem Bezugskörper 45 einen vorbestimmten Wert $C_{72}$ erreicht, der einem bestimmten Abstand $S_{72}$ zwischen der Pipettiernadel 42 und der Aussenfläche 76 des Bezugskörpers 45 entspricht. Die Koordinate der Position 72 in Y-Richtung ist $Y_{72}$. Anschliessend wird dieser Vorgang in entgegengesetzter Richtung durchgeführt, d.h. die Pipettiernadel 42 wird in Y-Richtung zu einer Fläche 77 des Bezugskörpers 45 hin bewegt, bis die Pipettiernadel eine Position 73 erreicht, bei der der gemessene Wert der elektrischen Kapazität $C_2$ zwischen der Pipettiernadel 42 und dem Bezugskörper 45 einen vorbestimmten Wert $C_{73}$ erreicht, der einem bestimmten Abstand $S_{73}$ zwischen der Pipettiernadel 42 und der Aussenfläche 77 des Bezugskörpers 45 entspricht. Die Koordinate der Position 73 in Y-Richtung ist $Y_{73}$. Im Rahmen der Erfindung ist vorzugsweise $C_{73}$ = $C_{72}$

und $S_{73}$ = $S_{72}$. Wie aus Fig. 11 ersichtlich, ist z.B. $C_{73}$ = $C_{72}$ = 1.2 Picofarad.

Beim soeben beschriebenen Verfahren, sowie bei den nachstehend beschriebenen Ausführungsformen, befindet sich die Pipettiernadel während ihrer geführten Bewegung gegen eine der seitlichen Aussenflächen des Bezugskörpers 45 vorzugsweise in der in Fig. 7 gezeigten vertikalen Lage (d.h. in Z-Richtung), bei der ein erheblicher Teil der Pipettiernadel gegenüber der Aussenfläche liegt. Auf diese Weise wird erreicht, dass die Kapazität $C_2$ einen ausreichend hohen Wert hat. Ausserdem wird durch die soeben erwähnte vertikale Lage der Pipettiernadel gemäss Fig. 7 erreicht, dass die Genauigkeit der Justierung, insbesondere für den oberen Teil der Pipettiernadel, sehr hoch ist, d.h. durch die Justierung wird der obere Teil der Pipettiernadel, mit höchster Genauigkeit an den verschiedenen Pipettierpositionen positioniert. Im vorliegenden Ausführungsbeispiel bringt dies den zusätzlichen Vorteil, dass der vom Transportkopf 51 getragene bzw. geführte Greifer 43 ebenfalls mit höchster Genauigkeit an den verschiedenen Positionen positioniert wird, wo er die Reaktiongefässe 31 fasst bzw. bringt.

Nach der Bestimmung der Koordinaten einer Bezugsposition der Pipettiernadel in X- bzw. Y-Richtung einschliesslich der feinen Justierung in wenigstens einer der waagerechten Transportrichtungen (X- bzw. Y-Richtung) wird eine Bezugsposition in Z-Richtung definiert, in dem die Pipettiernadel 42 von ihrer Ausgangslage in höchster Stellung und mit abnehmender Geschwindigkeit gegen die Mitte der oberen Fläche 46 des Bezugskörpers 45 bewegt wird, bis die Spitze der Pipettiernadel die Fläche 46 berührt und dieser Kontakt mit einer geeigneten Schaltung erfasst wird. Die so bestimmte Bezugsposition der Pipettiernadel in Z-Richtung wird gespeichert.

1. Bevorzugte Ausführungsform des Verfahrens zur feinen Justierung der Transportvorrichtung 51-55

In einer ersten bevorzugten Ausführungsform des Verfahrens zur feinen Justierung der Transportvorrichtung 51-55 werden ferner die Koordinatenwerte der zwei so definierten Positionen der Pipettiernadel 42 in der wenigstens einer waagerechten Transportrichtung erfasst und gespeichert. Durch Berechnung des Mittelwertes der zwei erfassten Koordinatenwerte, z.B. $Y_{72}$ und $Y_{73}$, werden die Koordinatenwerte einer Bezugsposition in der wenigstens einer waagerechten Transportrichtung ermittelt.

Die Bestimmung der Positionen 71 und 73 auf entgegengesetzten Seiten des Bezugskörpers 45 und die soeben erwähnte Berechnung des Mittelwertes der zwei erfassten Koordinatenwerte bringen den Vorteil, dass dadurch die Symmetrie des Bezugskörpers ausgenützt wird, um den Einfluss allfälliger Ungenauigkeiten der Kapazitätsmessung auf die errechnete Koordinatenwerte der Bezugsposition zu eliminieren.

Nach der Bestimmung der Koordinaten der Bezugsposition werden the X- bzw. Y-Koordinaten aller Pipettierpositionen der Pipettiernadel in Bezug auf die Koordinaten der Bezugsposition anhand der relevanten Dimensionen der verschiedenen Teile des Analysengerätes in der oben erwähnten Steuereinheit errechnet.

2. Bevorzugte Ausführungsform des Verfahrens zur feinen Justierung der Transportvorrichtung 51-55

In einer zweiten bevorzugten Ausführungsform des Verfahrens zur feinen Justierung der Transportvorrichtung 51-55 werden die Koordinaten Xo, Yo einer Bezugsachse bestimmt, die parallel zur vertikalen Transportrichtung (Z) und durch den Bezugskörper 45 verläuft. Dafür wird die Pipettiernadel 42 mittels der Transportvorrichtung 51-55 in beiden waagerechten Transportrichtungen (X- bzw. Y-Richtung) zu je einer Position in der Nähe jeder der beiden Aussenflächen 76, 77 bzw. 78, 79 des Bezugskörpers 45 bewegt, die senkrecht zur Transportrichtung angeordnet sind, wobei die Pipettiernadel 42 jeweils zu einer Fläche des Bezugskörpers 45 hin bewegt wird, bis der gemessene Wert der elektrischen Kapazität zwischen der Pipettiernadel 42 und dem Bezugskörper 45 einen vorbestimmten Wert erreicht, der einem bestimmten Abstand zwischen Pipettiernadel 42 und der Fläche des Bezugskörpers 45 entspricht.

Im Rahmen dieses Verfahrens wird z.B. neben der oben bereits beschriebenen Erfassung von bestimmten Bezugspunkten der Pipettiernadel in Y-Richtung das gleiche Verfahren in X-Richtung durchgeführt.

Hierfür wird die Pipettiernadel zuerst zu einer Fläche 78 des Bezugskörpers 45 hin bewegt wird, bis der gemessene Wert der elektrischen Kapazität zwischen der Pipettiernadel 42 und dem Bezugskörper 45 einen vorbestimmten Wert $C_{74}$ erreicht, der einem bestimmten Abstand $S_{74}$ zwischen der Pipettiernadel 42 und der Fläche des Bezugskörpers 45 entspricht, anschliessend wird dieser Vorgang in entgegengesetzter Richtung durchgeführt, d.h. die Pipettiernadel 42 wird in X-Richtung zu einer Fläche 79 des Bezugskörpers 45 hin bewegt, bis der gemessene Wert der elektrischen Kapazität zwischen der Pipettiernadel 42 und dem Bezugskörper 45 einen vorbestimmten Wert $C_{75}$ erreicht, der einem bestimmten Abstand $S_{75}$ zwischen der Pipettiernadel 42 und der Fläche des Bezugskörpers 45 entspricht. Im Rahmen der Erfindung ist vorzugsweise $C_{74}=C_{75}=C_{73}=C_{72}$ und $S_{74}=S_{75}=S_{73}=S_{72}$.

In dieser zweiten bevorzugten Ausführungsform des Verfahrens zur feinen Justierung der Transportvorrichtung 51-55 werden vorzugsweise die Koordinatenwerte der zwei so definierten Positionen der Pipettiernadel 42 in jeder der waagerechten Transportrichtungen erfasst und gespeichert. Durch Berechnung des Mittelwertes der zwei erfassten Koordinatenwerte werden die Koordinatenwerte einer Bezugsposition in jeder der waagerechten Transportrichtungen ermittelt .

Nach der Bestimmung der Koordinaten Xo, Yo der oben erwähnten Bezugsachse werden die X- bzw. Y-Koordinaten aller Pipettierpositionen der Pipettiernadel in Bezug auf Xo, Yo anhand der relevanten Dimensionen der verschiedenen Teile des Analysengerätes in der oben erwähnten Steuereinheit errechnet.

**Patentansprüche**

1. Analysengerät, das folgende Komponenten enthält:

   a) eine waagerecht angeordnete Grundplatte (12) auf der Primärgefässe (13 bzw. 23) und Sekundärgefässe (31) angeordnet sind,

   b) eine durch eine Leitung (99) mit einer Dosiervorrichtung (96) verbundene, aus einem elektrisch leitenden Material bestehende Pipettiernadel (42) zur Uebertragung von jeweils einem vorbestimmten Flüssigkeitsvolumen von einem Primärgefäss (13 bzw. 23) zu einem Sekundärgefäss (31),

   c) eine Transportvorrichtung (51-55) zum gesteuerten Transport der Pipettiernadel (42) in drei zueinander senkrechten Richtungen (X,Y, Z), wobei zwei der Transportrichtungen (X,Y) waagerecht verlaufen und die dritte Transportrichtung (Z) vertikal verläuft,

   d) einen mit der Grundplatte (12) mechanisch und elektrisch verbundenen, elektrisch leitenden Bezugskörper (45), der in jeder der waagerechten Transportrichtungen (X,Y) zwei Aussenflächen (76, 77 bzw. 78, 79) hat, die senkrecht zur Transportrichtung angeordnet sind,

   e) eine Steuereinrichtung zur Steuerung der Dosiervorrichtung (96) und der Transportvorrichtung (51-55), und

   f) eine Schaltung zur Messung der elektrischen Kapazität zwischen der Pipettiernadel (42) und dem Bezugskörper (45),

   **dadurch gekennzeichnet, dass** das Analysengerät ferner
   Mittel zur Bestimmung der Koordinaten einer Bezugsposition der Pipettiernadel (42) in wenigstens einer der waagerechten Transportrichtungen (X, Y) enthält, wobei diese Mittel dazu geeignet sind, durch die Steuereinrichtung die Transportvorrichtung (51-55) der Pipettiernadel (42) so zu bewegen, dass die Pipettiernadel (42)

(i) in einer ersten Richtung entlang der wenigstens einen waagrechten Transportrichtung zu einer ersten Position in der Nähe von einer der zwei Aussenflächen des Bezugskörpers (45) bewegt wird, ohne jedoch diese zu berühren, wobei diese erste Position erreicht wird, wenn der mit der Schaltung gemessene Wert der elektrischen Kapazität zwischen der Pipettiernadel (42) und dem Bezugskörper (45) einen vorbestimmten Wert erreicht, der einem bestimmten Abstand zwischen der Pipettiernadel (42) und der Aussenfläche des Bezugskörpers (45) entspricht, und

(ii) in einer zweiten, der ersten entgegengesetzten Richtung entlang der wenigstens einen waagrechten Transportrichtung zu einer zweiten Position in der Nähe von der anderen der zwei Aussenflächen des Bezugskörpers (45) bewegt wird, ohne jedoch diese zu berühren, wobei diese zweite Position erreicht wird, wenn der mit der Schaltung gemessene Wert der elektrischen Kapazität zwischen der Pipettiernadel (42) und dem Bezugskörper (45) einen vorbestimmten Wert erreicht, der einem bestimmten Abstand zwischen der Pipettiernadel (42) und der Aussenfläche des Bezugskörpers (45) entspricht.

2. Analysengerät gemäss Anspruch 1, **dadurch gekennzeichnet, dass** es ferner folgende Mittel enthält:

   a) Mittel zur Erfassung und Speicherung der Koordinatenwerte der zwei Positionen der Pipettiernadel (42), bei denen der vorbestimmte Wert der elektrischen Kapazität erreicht wird, in der wenigstens einer waagerechten Transportrichtung (X,Y), und

   b) Mittel zur Ermittlung der Koordinaten einer Bezugsposition in der Transportrichtung durch Berechnung des Mittelwertes der zwei erfassten Koordinatenwerte.

3. Analysengerät gemäss Anspruch 1, **dadurch gekennzeichnet, dass** es Mittel zur Bestimmung der Koordinaten (Xo, Yo) einer Bezugsachse enthält, die parallel zur vertikalen Transportrichtung Z und durch den Bezugskörper (45) verläuft, wobei diese Mittel dazu geeignet sind, die Transportvorrichtung (51-55) der Pipettiernadel (42) so zu bewegen, dass die Pipettiernadel (42) in beiden waagerechten Transportrichtungen (X,Y) und in entgegengesetzten Richtungen zu je einer Position in der Nähe jeder der beiden Aussenflächen (76, 77, 78, 79) des Bezugskörpers (45) bewegt wird, die senkrecht zur Transportrichtung angeordnet sind, wobei die Pipettiernadel (42) jeweils zu einer Fläche des Bezugskörpers (45) hin bewegt wird, bis der mit der Schaltung gemessene Wert der elektrischen Kapazität zwischen der Pipettiernadel (42) und dem Bezugskörper (45) einen vorbestimmten Wert erreicht, der einem bestimmten Abstand zwischen Pipettiernadel (42) und der Fläche des Bezugskörpers (45) entspricht.

4. Analysengerät gemäss Anspruch 3, **dadurch gekennzeichnet, dass** es ferner folgende Mittel enthält:

   a) Mittel zur Erfassung und Speicherung der Koordinatenwerte der zwei Positionen der Pipettiernadel (42), bei denen der vorbestimmte Wert der elektrischen Kapazität erreicht wird, in jeder der waagrechten Transportrichtungen (X,Y), und

   b) Mittel zur Ermittlung der Koordinatenwerte einer Bezugsposition in jeder der waagerechten Transportrichtungen durch Berechnung des Mittelwertes der zwei erfassten Koordinatenwerte.

5. Analysengerät gemäss Anspruch 1, **dadurch gekennzeichnet, dass** der abgetastete Bereich des Bezugskörpers (45) in einer zur Längsachse des Bezugskörpers (45) senkrechten Ebene einen quadratischen Querschnitt hat.

6. Analysengerät gemäss Anspruch 1 oder 3, **dadurch gekennzeichnet, dass** es Mittel zur groben Justierung der Transportvorrichtung (51-55) der Pipettiernadel (42) enthält, mit denen die Pipettiernadel (42) zu einer Endposition geführt wird und die Koordinaten (Xe, Ye, Ze) der Endposition der Pipettiernadel (42) in jeder der drei zueinander senkrechten Richtungen erfasst und gespeichert werden.

7. Verfahren zum automatischen Transport einer Pipettiernadel (42) einer automatischen Pipettiervorrichtung eines Analysengerätes zu einer Anzahl Pipettierpositionen mittels einer Transportvorrichtung (51-55), wobei jede Pipettierposition der Position eines bestimmten Gefässes entspricht, das auf einer Gefässträgereinheit angeordnet ist, wobei die Transportvorrichtung (51-55) dazu eingerichtet ist, die Pipettiernadel (42) in drei zueinander senkrechten Richtungen (X, Y, Z) zu bewegen, und wobei jede dieser Richtungen parallel zu einer der Koordinatenachsen des Koordinatensystems der Transportvorrichtung (51-55) ist, wobei zur Messung der Koordinaten von Bezugspunkten ein elektrisch leitenden Bezugskörper (45) verwendet wird, der mit der Grundplatte (12) mechanisch und elektrisch verbunden ist, und der in jeder der waagerechten Transportrichtungen (X,Y) zwei Aussenflächen (76, 77, 78, 79) hat, die senkrecht zur Transportrichtung angeordnet sind, und bei welchem Verfahren die elektrische Kapazität zwischen der Pipettiernadel (42) und dem Bezugskörper (45) gemessen wird, **dadurch gekennzeichnet, dass** zur Bestimmung der Koordinaten einer Bezugsposition der Pipettiernadel (42) in wenigstens einer der waagerechten Transportrichtungen (X, Y), die Pipettiernadel (42)

(i) in einer ersten Richtung entlang der wenigstens einen waagrechten Transportrichtung zu einer ersten Position in der Nähe von einer der zwei Aussenflächen des Bezugskörpers (45) bewegt wird, ohne jedoch diese zu berühren, wobei diese ersten Position erreicht wird, wenn der mit der Schaltung gemessene Wert der elektrischen Kapazität zwischen der Pipettiernadel (42) und dem Bezugskörper (45) einen vorbestimmten Wert erreicht, der einem bestimmten Abstand zwischen der Pipettiernadel (42) und der Aussenfläche des Bezugskörpers (45) entspricht, und

(ii) in einer zweiten, der ersten entgegengesetzten Richtung entlang der wenigstens einen waagrechten Transportrichtung zu einer zweiten Position in der Nähe von der anderen der zwei Aussenflächen des Bezugskörpers (45) bewegt wird, ohne jedoch diese zu berühren, wobei diese zweite Position erreicht wird, wenn der mit der Schaltung gemessene Wert der elektrischen Kapazität zwischen der Pipettiernadel (42) und dem Bezugskörper (45) einen vorbestimmten Wert erreicht, der einem bestimmten Abstand zwischen der Pipettiernadel (42) und der Aussenfläche des Bezugskörpers (45) entspricht.

8. Verfahren gemäss Anspruch 7, **dadurch gekennzeichnet, dass** die Koordinatenwerte der zwei Positionen der Pipettiernadel (42), bei denen der vorbestimmte Wert der elektrischen Kapazität erreicht wird, in der wenigstens einen waagerechten Transportrichtung (X, Y), erfasst und gespeichert werden, und dass die Koordinatenwerte einer Bezugsposition in der Transportrichtung durch Berechnung des Mittelwertes der zwei erfassten Koordinatenwerte ermittelt werden.

9. Verfahren gemäss Anspruch 7, **dadurch gekennzeichnet, dass** zur Bestimmung der Koordinaten (Xo, Yo) einer Bezugsachse, die parallel zur vertikalen Transportrichtung (Z) und durch den Bezugskörper (45) verläuft, die Transportvorrichtung (51-55) die Pipettiernadel (42) in beiden waagerechten Transportrichtungen (X, Y) zu je einer Position in der Nähe jeder der beiden Aussenflächen (76, 77, 78, 79) des Bezugskörpers (45) bewegt wird, die senkrecht zur Transportrichtung angeordnet sind, wobei die Pipettiernadel (42) jeweils zu einer Fläche des Bezugskörpers (45) hin bewegt wird, bis der gemessene Wert der elektrischen Kapazität zwischen der Pipettiernadel (42) und dem Bezugskörper (45) einen vorbestimmten Wert erreicht, der einem bestimmten Abstand zwischen Pipettiernadel (42) und der Fläche des Bezugskörpers (45) entspricht.

10. Verfahren gemäss Anspruch 9, **dadurch gekennzeichnet, dass** die Koordinatenwerte der zwei Positionen der Pipettiernadel (42), bei denen der vorbestimmte Wert der elektrischen Kapazität erreicht wird, in jeder der waagerechten Transportrichtungen erfasst und gespeichert wird, und dass die Koordinatenwerte einer Bezugsposition in jeder der waagerechten Transportrichtungen durch Berechnung des Mittelwertes der zwei erfassten Koordinatenwerte ermittelt werden.

11. Verfahren gemäss Anspruch 7 oder 9, **dadurch gekennzeichnet, dass** vor der Abtastung der Flächen des wenigstens einen Bezugskörpers (45) mit der Pipettiernadel (42) eine grobe Justierung der Transportvorrichtung (51-55) der Pipettiernadel (42) durchgeführt wird, wobei zur groben Justierung der Transportvorrichtung (51-55) die Pipettiernadel (42) zu einer Endposition geführt wird und die Koordinaten (Xe, Ye, Ze) der Endposition der Pipettiernadel (42) in jeder der drei zueinander senkrechten Richtungen erfasst und gespeichert werden.

**Claims**

1. An analyser comprising the following components:

a) a horizontally disposed baseplate (12) on which primary containers (13; 23) and secondary containers (31) are disposed,

b) a pipetting needle (42) consisting of an electrically conductive material and connected to a metering device (96) by a line (99), for transferring a predetermined volume of liquid each time from a primary container (13; 23) to a secondary container (31),

c) a transport device (51-55) for the controlled transport of the pipetting needle (42) in three directions (X,Y,Z) at right angles to one another, two of the transport directions (X,Y) extending horizontally and the third transport direction (Z) extending vertically,

d) an electrically conductive reference body (45) which is connected mechanically and electrically to the baseplate (12) and which in each of the horizontal transport directions (X,Y) has two outer surfaces (76, 77; 78, 79) which are disposed at right angles to the transport direction,

e) a control device for controlling the metering device (96) and the transport device (51-55) and

f) a circuit for measuring the electrical capacitance between the pipetting needle (42) and the reference body (45),

**characterised in that** the analyser also comprises means for determining the co-ordinates of a reference position of the pipetting needle (42) in at least one of the horizontal transport directions (X,Y), said means being adapted so to move the transport device (51-55) of the pipetting needle (42) by the control device that the pipetting needle (42)

(i) is moved in a first direction along the at least one horizontal transport direction into a first position in the vicinity of one of the two outer surfaces of the reference body 45) but without touching the latter, said first position being reached when the value of the electrical capacitance between the pipetting needle (42) and the reference body (45) as measured by the circuit reaches a predetermined value corresponding to a specific distance between the pipetting needle (42) and the outer surface of the reference body (45), and

(ii) in a second direction in opposition to the first direction along the at least one horizontal transport direction into a second position in the vicinity of the other of the two outer surfaces of the reference body (45) but without touching the latter, said second position being reached when the value of the electrical capacitance between the pipetting needle (42) and the reference body (45) as measured by the circuit reaches a predetermined value corresponding to a specific distance between the pipetting needle (42) and the outer surface of the reference body (45).

2. An analyser according to claim 1, **characterised in that** it also comprises the following means:

a) means for detecting and storing the co-ordinate values of the two positions of the pipetting needle (42) in which the predetermined value of the electrical capacitance is reached, in the at least one horizontal transport direction (X,Y), and

b) means for determining the co-ordinates of a reference position in the transport direction by calculating the average of the two detected co-ordinate values.

3. An analyser according to claim 1, **characterised in that** it comprises means for determining the co-ordinates (Xo, Yo) of a reference axis extending parallel to the vertical transport direction (Z) and through the reference body (45), said means being adapted so to move the transport device (51-55) of the pipetting needle (42) that the pipetting needle (42) is moved in the two horizontal transport directions (X,Y) and in opposite directions in each case into a position in the vicinity of each of the two outer surfaces (76, 77, 78, 79) of the reference body (45) which are disposed at right angles to the transport direction, the pipetting needle (42) being moved in each case towards a surface of the reference body (45) until the value of the electrical capacitance between the pipetting needle (42) and the reference body (45) as measured by the circuit reaches a predetermined value corresponding to a specific distance between the pipetting needle (42) and the surface of the reference body (45).

4. An analyser according to claim 3, **characterised in that** it also comprises the following means:

a) means for detecting and storing the co-ordinate values of the two positions of the pipetting needle (42) in which the predetermined value of the electrical capacitance is reached, in each of the horizontal transport directions (X,Y), and

b) means for determining the co-ordinate values of a reference position in each of the horizontal transport directions by calculating the average of the two detected co-ordinate values.

5. An analyser according to claim 1, **characterised in that** the scanned zone of the reference body (45) has a square cross-section in a plane at right angles to the longitudinal axis of the reference body (45).

6. An analyser according to claim 1 or 3, **characterised in that** it comprises means for rough adjustment of the transport device (51-55) of the pipetting needle (42), with which the pipetting needle (42) is brought into an end position and the co-ordinates (Xe, Ye, Ze) of the end position of the pipetting needle (42) in each of the three directions at right angles to one another are detected and stored.

7. A method for the automatic transport of a pipetting needle (42) of an automatic pipetting device of an analyser to a number of pipetting positions by means of a transport device (51-55), each pipetting position corresponding to the position of a specific container disposed on a container carrier unit, the transport device (51-55) being adapted to move the pipetting needle (42) in three directions (X,Y,Z) at right angles to one another, each of said directions being parallel to one of the co-ordinate axes of the co-ordinate system of the transport device (51-55), an electrically conductive reference body (45) being used to measure the co-ordinates of reference points, said reference body being mechanically and electrically connected to the baseplate (12) and having in each of the horizontal transport directions (X,Y) two outer surfaces (76, 77, 78, 79) which are disposed at right angles to the transport direction and

in which method the electrical capacitance between the pipetting needle (42) and the reference body (45) is measured,

**characterised in that** to determine the co-ordinates of a reference position of the pipetting needle (42) in at least one of the horizontal transport directions (X,Y) the pipetting needle (42)

(i) is moved in a first direction along the at least one horizontal transport direction into a first position in the vicinity of one of the two outer surfaces of the reference body 45) but without touching the latter, said first position being reached when the value of the electrical capacitance between the pipetting needle (42) and the reference body (45) as measured by the circuit reaches a predetermined value corresponding to a specific distance between the pipetting needle (42) and the outer surface of the reference body (45), and

(ii) in a second direction in opposition to the first direction along the at least one horizontal transport direction into a second position in the vicinity of the other of the two outer surfaces of the reference body (45) but without touching the latter, said second position being reached when the value of the electrical capacitance between the pipetting needle (42) and the reference body (45) as measured by the circuit reaches a predetermined value corresponding to a specific distance between the pipetting needle (42) and the outer surface of the reference body (45).

8. A method according to claim 7, **characterised in that** the co-ordinate values of the two positions of the pipetting needle (42) in which the predetermined value of the electrical capacitance is reached in the at least one horizontal transport direction (X, Y) are detected and stored and in that the co-ordinate values of a reference position in the transport direction are determined by calculating the average of the two detected co-ordinate values.

9. A method according to claim 7, **characterised in that** for determining the co-ordinates (Xo, Yo) of a reference axis extending parallel to the vertical transport direction (Z) and through the reference body (45), the transport device (51-55) moves the pipetting needle (42) in the two horizontal transport directions (X,Y) in each case into a position in the vicinity of each of the two outer surfaces (76, 77, 78, 79) of the reference body (45) which are disposed at right angles to the transport direction, the pipetting needle (42) being moved in each case towards a surface of the reference body (45) until the measured value of the electrical capacitance between the pipetting needle (42) and the reference body (45) reaches a predetermined value corresponding to a specific distance between the pipetting needle (42) and the surface of the reference body (45).

10. A method according to claim 9, **characterised in that** the co-ordinate values of the two positions of the pipetting needle (42) in which the predetermined value of the electrical capacitance is reached in each of the horizontal transport directions is detected and stored and in that the co-ordinate values of a reference position in each of the horizontal transport directions are determined by calculating the average of the two detected co-ordinate values.

11. A method according to claim 7 or 9,
**characterised in that** before the scanning of the surfaces of the at least one reference body (45) with the pipetting needle (42) a rough adjustment of the transport device (51-55) for the pipetting needle (42) is carried out,
wherein for the purpose of rough adjustment of the transport device (51-55) the pipetting needle (42) is brought into an end position and the co-ordinates (Xe, Ye, Ze) of the end position of the pipetting needle (42) in each of the three directions at right angles to one another are detected and stored.

### Revendications

1. Appareil d'analyse contenant les composants suivants :

a) une plaque de base (12), disposée horizontalement, sur laquelle sont disposés des récipients primaires (13 ou 23) et des récipients secondaires (31),
b) une aiguille de prélèvement (42), reliée par une ligne (99) à un dispositif de dosage (96), constituée d'un matériau électriquement conducteur, pour transférer chaque fois d'un récipient primaire (13 ou 23) à un récipient secondaire (31) un volume de liquide prédéterminé,

c) un dispositif de transport (51-55) pour le transport commandé de l'aiguille de prélèvement (42) selon trois directions (X, Y, Z) perpendiculaires l'une à l'autre, deux des directions de transport (X, Y) étant orientées horizontalement et la troisième direction de transport (Z) l'étant verticalement,

d) un élément de référence (45) qui est relié mécaniquement et électriquement avec la plaque de base (12), est électriquement conducteur et présente, dans chacune des directions de transport horizontales (X, Y), deux surfaces extérieures (76, 77 ou 78, 79) qui sont disposées perpendiculairement à la direction de transport,

e) un organe de commande pour commander le dispositif de dosage (96) et le dispositif de transport (51-55),

f) un circuit pour mesurer la capacité électrique entre l'aiguille de prélèvement (42) et l'élément de référence (45),

**caractérisé par** le fait que l'appareil d'analyse comporte en outre

des moyens pour déterminer les coordonnées d'une position de référence de l'aiguille de prélèvement (42) selon au moins l'une des directions de transport horizontales (X, Y), ces moyens étant appropriés pour, par l'intermédiaire de l'organe de commande, mouvoir le dispositif de transport (51-55) de l'aiguille de prélèvement (42) de façon que l'aiguille de prélèvement (42)

i) soit amenée dans une première direction selon la direction de transport horizontale, dont il y a au moins une, à une première position au voisinage de l'une des deux surfaces extérieures de l'élément de référence (45), sans toutefois le toucher, cette première position étant atteinte lorsque la valeur, mesurée avec le circuit, de la capacité électrique entre l'aiguille de prélèvement (42) et l'élément de référence (45) atteint une valeur prédéterminée qui correspond à une distance prédéterminée entre l'aiguille de prélèvement (42) et la surface extérieure de l'élément de référence (45),

ii) soit amenée dans une seconde direction, opposée à la première, selon la direction de transport horizontale, dont il y a au moins une, à une seconde position au voisinage de l'autre des deux surfaces extérieures de l'élément de référence (45), sans toutefois le toucher, cette seconde position étant atteinte lorsque la valeur, mesurée avec le circuit, de la capacité électrique entre l'aiguille de prélèvement (42) et l'élément de référence (45) atteint une valeur prédéterminée qui correspond à une distance prédéterminée entre l'aiguille de prélèvement (42) et la surface extérieure de l'élément de référence (45),

2.   Appareil d'analyse selon la revendication 1, **caractérisé par** le fait qu'il comporte en outre des moyens suivants :

a) des moyens pour saisir et mémoriser les coordonnées des deux positions de l'aiguille de prélèvement (42) pour lesquelles est atteinte la valeur prédéterminée de la capacité électrique selon la direction de transport horizontale (X, Y) dont il y a au moins une,

b) des moyens pour déterminer les coordonnées d'une position de référence selon la direction du transport en calculant la moyenne des deux coordonnées saisies.

3.   Appareil d'analyse selon la revendication 1, **caractérisé par** le fait qu'il comporte des moyens pour déterminer les coordonnées (X0, Y0) d'un axe de référence qui est orienté parallèlement à la direction de transport verticale (Z) et passe à travers l'élément de référence (45), ces moyens étant appropriés à mouvoir le dispositif de transport (51-55) de l'aiguille de prélèvement (42) de façon que l'aiguille de prélèvement (42) se déplace selon les deux directions de transport horizontales (X, Y) et selon les directions opposées, pour venir chaque fois en une position voisine de chacune des deux faces extérieures (76, 77, 78, 79) de l'élément de référence (45) qui sont disposées perpendiculairement à la direction de transport, l'aiguille de prélèvement (42) se déplaçant chaque fois vers une face de l'élément de référence (45) jusqu'à ce que la valeur, mesurée par le circuit, de la capacité électrique entre l'aiguille de prélèvement (42) et l'élément de référence (45) atteigne une valeur prédéterminée qui correspond à une distance déterminée entre l'aiguille de prélèvement (42) et la face de l'élément de référence (45).

4.   Appareil d'analyse selon la revendication 3, **caractérisé par** le fait qu'il comporte en outre des moyens suivants :

a) des moyens pour saisir et mémoriser les coordonnés des deux positions de l'aiguille de prélèvement (42) pour lesquelles la valeur prédéterminée de la capacité électrique est atteinte selon chacune des dispositions horizontales de transport (X, Y) et

b) des moyens pour déterminer les coordonnées d'une position de référence selon chacune des directions de transport horizontales en calculant la moyenne des deux coordonnées saisies.

5. Appareil d'analyse selon la revendication 1, **caractérisé par** le fait que la zone explorée de l'élément de référence (45) présente une section carrée dans un plan perpendiculaire à l'axe longitudinal de l'élément de référence (45).

6. Appareil d'analyse selon la revendication 1 ou 3, **caractérisé par** le fait que, pour ajuster grossièrement le dispositif de transport (51-55) de l'aiguille de prélèvement (42), il comporte des moyens avec lesquels l'aiguille de prélèvement (42) est conduite à une position d'extrémité et les coordonnées (Xe, Ye, Ze), de la position d'extrémité de l'aiguille de prélèvement (42) sont saisies et mémorisées selon chacune des trois directions perpendiculaires l'une à l'autre.

7. Procédé de transport automatique d'une aiguille de prélèvement (42) d'un dispositif de prélèvement automatique d'un appareil d'analyse en un certain nombre de positions de prélèvement au moyen d'un dispositif de transport (51-55), dans lequel chaque position de prélèvement correspond à la position d'un récipient déterminé qui est disposé sur un porte-récipients, dans lequel le dispositif de transport (51-55) est prévu pour déplacer l'aiguille de prélèvement (42) selon trois directions (X, Y, Z) perpendiculaires l'une à l'autre, et dans lequel chacune de ces directions est parallèle à l'un des axes de coordonnées du système de coordonnées du dispositif de transport (51-55), dans lequel, pour mesurer les coordonnées des points de référence, on emploie un élément de référence électriquement conducteur (45) qui est relié mécaniquement et électriquement à la plaque de base (12) et qui présente selon chacune des directions de transport horizontales (X, Y), deux faces extérieures (76, 77, 78, 79) qui sont disposées perpendiculairement à la direction de transport et procédé dans le cas duquel on mesure la capacité électrique entre l'aiguille de prélèvement (42) et l'élément de référence (45), **caractérisé par** le fait que pour déterminer les coordonnées d'une position de référence de l'aiguille de prélèvement (42) selon au moins l'une des directions de transport horizontales (X, Y), on amène l'aiguille de prélèvement (42)

    i) dans une première direction selon la direction de transport horizontale, dont il y a au moins une, à une première position au voisinage de l'une des deux surfaces extérieures de l'élément de référence (45), sans toutefois le toucher, cette première position étant atteinte lorsque la valeur, mesurée avec le circuit, de la capacité électrique entre l'aiguille de prélèvement (42) et l'élément de référence (45) atteint une valeur prédéterminée qui correspond à une distance prédéterminée entre l'aiguille de prélèvement (42) et la surface extérieure de l'élément de référence (45),

    ii) dans une seconde direction opposée à la première selon la direction de transport horizontale, dont il y a au moins une, à une seconde position au voisinage de l'autre des deux surfaces extérieures de l'élément de référence (45), sans toutefois le toucher, cette seconde position étant atteinte lorsque la valeur, mesurée avec le circuit, de la capacité électrique entre l'aiguille de prélèvement (42) et l'élément de référence (45) atteint une valeur prédéterminée qui correspond à une distance prédéterminée entre l'aiguille de prélèvement (42) et la surface extérieure de l'élément de référence (45).

8. Procédé selon la revendication 7, **caractérisé par** le fait que les coordonnées des deux positions de l'aiguille de prélèvement (42) pour lesquelles la valeur prédéterminée de la capacité électrique est atteinte, selon la direction de transport horizontale (X, Y) dont il y a au moins une, sont saisies et mémorisées et que les coordonnées d'une position de référence selon la direction du transport sont déterminées en calculant la moyenne des deux coordonnées saisies.

9. Procédé selon la revendication 7, **caractérisé par** le fait que pour déterminer les coordonnées (X0, Y0) d'un axe de référence qui est orienté parallèlement à la direction de transport verticale (Z) et passe à travers l'élément de référence (45), le dispositif de transport (51-55) déplace l'aiguille de prélèvement (42) selon deux directions de transport horizontales (X, Y) pour venir chaque fois en une position voisine de chacune des deux faces extérieures (76, 77, 78, 79) de l'élément de référence (45) qui sont disposées perpendiculairement à la direction de transport, dans lequel l'aiguille de prélèvement (42) se déplace chaque fois vers une face de l'élément de référence (45) jusqu'à ce que la valeur mesurée de la capacité électrique entre l'aiguille de prélèvement (42) et l'élément de référence (45) atteigne une valeur prédéterminée qui correspond à une distance déterminée entre l'aiguille de prélèvement (42) et la face de l'élément de référence (45).

10. Procédé selon la revendication 9, **caractérisé par** le fait que les coordonnées des deux positions de l'aiguille de prélèvement (42) pour lesquelles la valeur prédéterminée de la capacité électrique est atteinte sont saisies et mémorisées selon chacune des directions de transport horizontales et que les coordonnées d'une position de référence selon chacune des directions de transport horizontales sont déterminées en calculant la valeur moyenne des deux coordonnées saisies.

11. Procédé selon la revendication 7 ou 9, **caractérisé par** le fait qu'avant l'exploration des faces de l'élément de référence (45), dont il y a au moins un, par l'aiguille de prélèvement (42), il est procédé à un ajustement grossier des dispositifs de transport (51-55) de l'aiguille de prélèvement (42),

dans lequel, pour ajuster grossièrement le dispositif de transport (51-55), l'aiguille de prélèvement (42) est conduite à une position d'extrémité et les coordonnées (Xe, Ye, Ze) de la position d'extrémité de l'aiguille de prélèvement (42) sont saisies et mémorisées selon chacune des trois directions perpendiculaires l'une à l'autre.

Fig. 1

Fig. 2

EP 0 681 184 B1

Fig. 3

Fig. 4

Fig. 5

**Fig. 6**

Fig. 7

Fig. 8

Fig. 9

EP 0 681 184 B1

R$_1$

R$_2$

C$_1$

C$_2$

C$_3$

105

106

*Fig. 10*

Fig. 11

EP 0 681 184 B1